# EUROPEAN PATENT SPECIFICATION

(11) **EP 1 688 298 B1**
(45) Date of publication and mention of the grant of the patent: **26.03.2008**
(21) Application number: 06075131.0
(22) Date of filing: 20.01.2006
(51) Int. Cl.: B60N 2/015, B62D 25/20

(54) **Modular floor system for a vehicle**
Modulares Bodensystem für Fahrzeuge
Système de plancher modulaire pour véhicules

(30) Priority: 04.02.2005 NL 1028194
(43) Date of publication of application: 09.08.2006
(73) Proprietor: Smartfloor B.V., 7605 AR Almelo (NL)
(72) Inventor: Wieland, Franz Herbert, 5731 AP Mierlo (NL)
(74) Representative: 't Jong, Bastiaan Jacob

(56) References cited:
- EP-A- 1 495 946
- WO-A-01/38127
- WO-A-99/25601
- DE-A1- 10 344 138
- FR-A- 1 081 087
- GB-A- 2 353 769

## Description

The invention relates to a modular floor system for mounting in a vehicle, according to the preamble of Claim 1.

Such floor systems known from e.g. EP-A-1 495 946, are often used in minivan taxis, wherein it is desirable to be able to place double seats and single seats in and remove them from the vehicle quickly and easily. Such floor systems consist of elongate aluminium extrusion profiles, which are glued adjacently of each other to the loading floor of the vehicle. The profiles comprise grooves in which the attachment points of the single seats can engage.

Because single seats and double seats as well as attachments for wheelchairs are frequently mounted in the vehicle and once again removed therefrom, and because the single seats are moreover arranged at fixed positions in the vehicle, wear of the profiles takes place after a time, whereby the attachment points of the single seats and double seats no longer engage fully on the floor. This creates play, whereby the wear of the floor system will proceed even more quickly.

Replacement of the profiles of the floor system is extremely costly and time-consuming. Such floor systems are usually glued fixedly to the loading floor in the vehicle so as to thus minimize any chance of noise being generated due to movement between the vehicle and the system floor. However, when a worn floor now has to be removed from the vehicle, the glue must then be removed either by means of heating, by means of solvents or by means of a mechanical operation between the loading floor and the floor system.

It is now an object of the invention to provide a floor system wherein the above stated drawbacks are alleviated, or even obviated. This object is achieved with a modular floor system according to claim 1.

The system floor for fixing in a vehicle is formed by elongate profiles coupled to each other, wherein at least one profile is provided with an open groove in which a module can be placed. When this module is worn, it can be readily removed without the elongate profiles having to be removed from the vehicle. This thus prevents loosening of the glue layer between the elongate profiles and the loading floor of the relevant vehicle.

In a preferred embodiment of the floor system according to the invention, the at least one module comprises an elongate mounting rail for fixing for instance a single seat to the floor system. The usual single seats and double seats use a rapid-action system which engages in a mounting rail designed for this purpose. By now embodying the module as such a mounting rail and arranging thereof in the open groove in the profile, it becomes possible to replace the mounting rail when it is worn or when for instance the setup in the vehicle is changed.

In another embodiment of the floor system according to the invention the at least one module comprises a cover part for covering the open groove. It thus becomes possible to provide for instance a part of the loading floor of the vehicle with such a floor system and herein leave uncovered only the grooves in the profiles which are required to fix for instance a double seat to the floor system. The other grooves are then provided with a cover part module, thus creating a floor which is further completely closed.

In yet another embodiment of the floor system according to the invention, the at least one module comprises a mounting block. A tightening strap can for instance be fastened to this mounting block in order to thus secure cargo on the loading floor.

The elongate profiles are preferably extrusion profiles.

In another preferred embodiment of the floor system according to the invention, the elongate profiles comprise coupling means for mutual coupling. The coupling means preferably comprise a first coupling piece arranged on a first longitudinal side of the relevant profile and a second coupling piece arranged on the opposite, second longitudinal side.

Highly recommended is the embodiment wherein the first and second coupling pieces comprise co-acting first coupling parts for blocking displacement in both transverse directions perpendicularly of the longitudinal direction and perpendicularly of each other, and comprises second coupling parts for blocking the rotation around the first coupling parts. The elongate profiles can hereby be coupled to each other and arranged as an integral board in the vehicle.

Highly preferred is that the second coupling parts comprise a snap connection. The different profiles can hereby be snapped into each other, thereby enabling a very rapid manufacture of the floor.

The invention further comprises a vehicle comprising a loading floor and a floor system according to the invention, wherein the mutually coupled elongate profiles are glued to the loading floor.

These and other features are further elucidated with reference to the accompanying drawings.

Figure 1 shows a perspective view of a vehicle according to the invention in which a floor system according to the invention is arranged.

Figure 2 shows a partly cross-sectional view of particularly the loading floor of the vehicle of figure 1 having thereon the floor system.

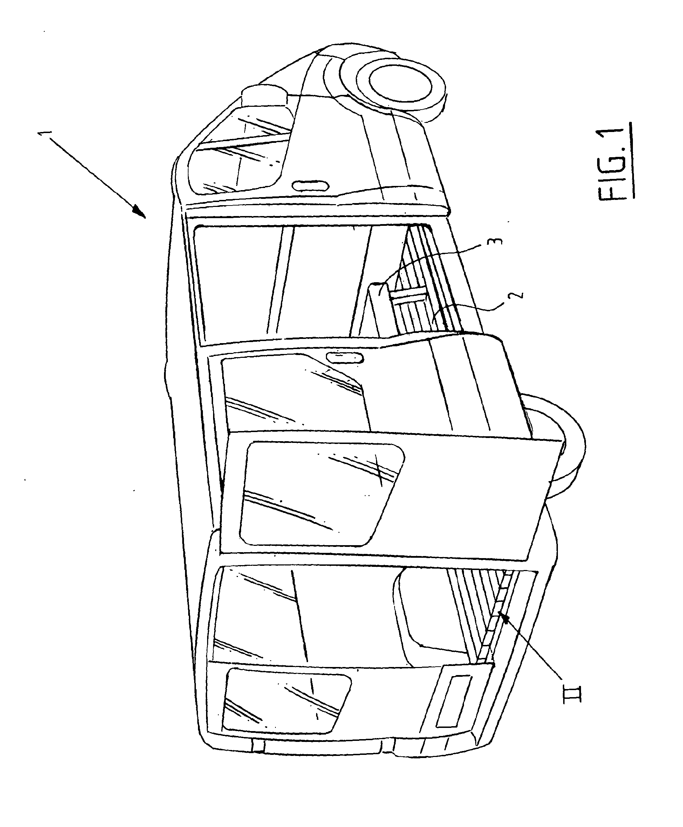

Figure 1 shows a passenger minivan 1 wherein a floor system 2 according to the invention is arranged on the loading floor. A double seat 3 is fixed to this floor system 2. If desired, this double seat 3 can be readily displaced on floor system 2 or removed from vehicle 1.

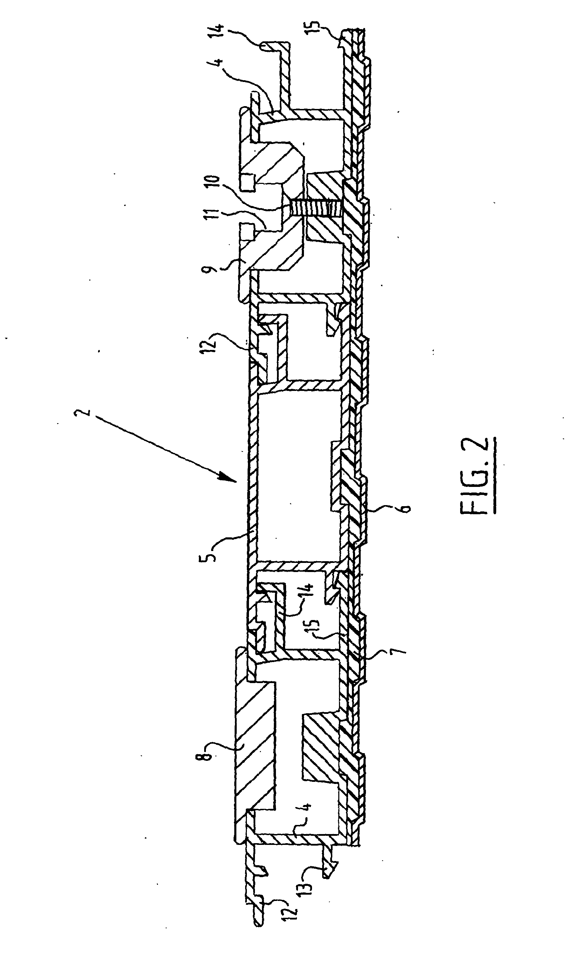

Figure 2 shows a cross-sectional view as according to arrow II in figure 1. Floor system 2 consists of elongate extrusion profiles 4, 5 coupled to each other. Floor system 2 is fixed to loading floor 6 of vehicle 1 by means of a glue layer 7.

The longitudinal profile 4 comprises an open groove in which is arranged a module 8, 9. Module 8 is a cover plate which covers the open groove of longitudinal profile 4. Module 9 is a mounting rail which is arranged in the groove and connected to profile 4 by means of screws 10. Mounting rail 9 has a specially designed groove 11 into which can engage a rapid-action system as normally used for double seats in vehicles.

Use is likewise made in this embodiment of floor system 2 of a longitudinal profile 5 which is closed on the top. Determined parts of floor system 2 can hereby be given a closed form. If for instance floor system 2 is used only to fix a number of double seats in a vehicle 1, only a limited number of elongate profiles 4 are then required with open groove in which a mounting rail 9 can be placed and with which double seats 3 can be fixed to floor system 2. The other parts of floor system 2 can then be covered by means of elongate closed profiles 5. If however the loading floor of a vehicle 1 is used for different purposes, on the one hand for instance to mount double seats 3, single seats or wheelchairs, and on the other to fix cargo, more elongate profiles 4 can then be provided, wherein the open groove can optionally be covered by a cover module 8 or can be provided with a mounting rail 9 or can be provided with a mounting block to which for instance a tightening belt or the like can be coupled.

Elongate profiles 4, 5 are provided with coupling means. These coupling means consist of tongues 12, 13, 14 and 15. Tongue 12 co-acts with tongue 14 of an adjacent profile and ensures that the two coupled profiles cannot displace in either transverse direction. Tongues 13 and 15, which are provided with a hook part so that they can be snapped together, ensure that the profiles can no longer rotate around the coupling of tongues 12 and 14. Profiles 4, 5 can thus be rotated and snapped fixedly into each other so as to thus form a floor board part, where after floor 2 can be placed integrally into vehicle 1 and there be glued.

It is self-evident that the floor system according to the invention can be used for a part of loading floor 6 as well as for the whole loading floor. For instance in the case of a minivan with double cab the relevant system floor can be arranged in the second cab, so that the relevant double seat can here be optionally placed or removed.

## Claims

1. Modular floor system (2) for mounting in a vehicle (1), which floor system (2) comprises:
- a number of elongate profiles (4,5) coupled adjacent to each other and forming a floor, wherein at least one of the profiles (4) comprises a groove open to the top, defining an elongate opening in said profile (4)
- at least one module (8,9) placed in the open groove, wherein the module (8,9) is mounted releasably in the groove
**characterized in that**
the whole of the part of the module (8,9) located inside the open groove has a width smaller than the width of the opening along the length of the groove, such that the at least one module (8,9) can be placed from above into the groove in a direction perpendicular to the longitudinal direction of the elongate profiles (4,5).

2. Floor system (2) as claimed in claim 1, wherein the at least one module (9) comprises an elongate mounting rail for fixing for instance a single seat(3) to the floor system (2).

3. Floor system (2) as claimed in claim 1 or 2, wherein the at least one module (8) comprises a cover part 8 for covering the open groove.

4. Floor system (2) as claimed in any of the foregoing claims, wherein the at least one module (9) comprises a mounting block.

5. Floor system (2) as claimed in any of the foregoing claims, wherein the elongate profiles (4,5) are extrusion profiles (4,5).

6. Floor system (2) as claimed in any of the foregoing claims, wherein the elongate profiles 4,5 comprise coupling means (12,13,14,15) for mutual coupling.

7. Floor system (2) as claimed in claim 6, wherein the coupling means (12,13,14,15) comprise a first coupling piece (12,13) arranged on a first longitudinal side of the relevant profile (4,5) and a second coupling piece (14,15) arranged on the opposite, second longitudinal side.

8. Floor system (2) as claimed in claim 7, wherein the first and second coupling pieces (12,13,14,15) comprise co-acting first coupling parts (12,14) for blocking displacement in both transverse directions perpendicularly of the longitudinal direction and perpendicularly of each other, and comprises second coupling parts (13,15) for blocking rotation around the first coupling parts (12,14).

9. Floor system (2) as claimed in claim 8, wherein the second coupling parts (13,15) comprise a snap connection.

10. Vehicle (1) comprising a loading floor (6) and a floor system (2) as claimed in any of the foregoing claims, wherein the mutually coupled elongate profiles (4,5) are glued to the loading floor (6).

## Patentansprüche

1. Modulares Bodensystem (2) zur Montage in ein Fahrzeug (1), wobei das Bodensystem (2) umfasst:
- mehrere längliche Profile (4, 5), die, einander benachbart, miteinander gekoppelt sind und einen Boden ausbilden, wobei wenigstens eines der Profile (4) eine Aussparung umfasst, die nach oben hin offen ist und eine längliche Öffnung in dem Profil (4) definiert
- wenigstens ein Modul (8, 9), das in der offenen Aussparung angeordnet ist, wobei das Modul (8, 9) lösbar in der Aussparung montiert ist,
**dadurch gekennzeichnet, dass**
die Gesamtheit des im Inneren der offenen Aussparung angeordneten Teils des Moduls (8, 9) eine Breite hat, die kleiner ist als die Breite der Öffnung entlang der Länge der Aussparung, derart, dass das wenigstens eine Modul (8, 9) von oben her in einer Richtung senkrecht zu der longitudinalen Richtung der länglichen Profile (4, 5) in der Aussparung plazierbar ist.

2. Bodensystem (2) nach Anspruch 1, bei welchem das wenigstens eine Modul (9) eine längliche Montageschiene umfasst zum Befestigen beispielsweise eines einzelnen Sitzes (3) an dem Bodensystem (2).

3. Bodensystem (2) nach Anspruch 1 oder 2, bei welchem das wenigstens eine Modul (8) ein Abdeckteil 8 zum Abdecken der offenen Aussparung umfasst.

4. Bodensystem (2) nach einem der vorstehenden Ansprüche, bei welchem das wenigstens eine Modul (9) einen Montageblock umfasst.

5. Bodensystem (2) nach einem der vorstehenden Ansprüche, bei welchem die länglichen Profile (4, 5) Extrusionsprofile (4, 5) sind.

6. Bodensystem (2) nach einem der vorstehenden Ansprüche, bei welchem die länglichen Profile 4, 5 Kopplungsmittel (12, 13, 14, 15) zum gegenseitigen Koppeln umfassen.

7. Bodensystem (2) nach Anspruch 6, bei welchem die Kopplungsmittel (12, 13, 14, 15) ein erstes Kopplungsteil (12, 13) umfassen, das an einer ersten longitudinalen Seite des relevanten Profils (4, 5) angeordnet ist und ein zweites Kopplungsteil (14, 15), das an der gegenüberliegenden, zweiten longitudinalen Seite angeordnet ist.

8. Bodensystem (2) nach Anspruch 7, bei welchem das erste und zweite Kopplungsteil (12, 13, 14, 15) zusammenwirkende erste Kopplungsstücke (12, 14) umfassen zum Blockieren des Versatzes in beiden transversalen Richtungen senkrecht der longitudinalen Richtung und senkrecht zueinander und zweite Kopplungsstücke (13, 15) umfasst zum Blockieren einer Drehung um die ersten Kopplungsstücke (12, 14).

9. Bodensystem (2) nach Anspruch 8, bei welchem die zweiten Kopplungsstücke (13, 15) eine Schnappverbindung umfassen.

10. Fahrzeug (1) umfassend einen Ladeboden (6) und ein Bodensystem (2) nach einem der vorstehenden Ansprüche, bei welchem die gegenseitig gekoppelten, länglichen Profile (4, 5) an den Ladeboden (6) geklebt sind.

## Revendications

1. Système de plancher modulaire (2) destiné à être monté dans un véhicule (1), lequel système de plancher (2) comprend :
- un certain nombre de profilés allongés (4, 5) accouplés à proximité les uns des autres et formant un plancher, dans lequel au moins un des profilés (4) comprend un rainure ouverte vers le haut, qui définit une ouverture allongée dans ledit profilé (4)
- au moins un module (8, 9) placé dans la rainure ouverte, dans lequel le module (8, 9) est monté de façon démontable dans la rainure
**caractérisé en ce que**
la totalité de la partie du module (8, 9) située à l'intérieur de la rainure ouverte a une largeur plus petite que la largeur de l'ouverture le long de la longueur de la rainure, de sorte que le ou chaque module (8,9) peut être introduit par le haut dans la rainure dans une direction perpendiculaire à la direction longitudinale des profils allongés (4, 5).

2. Système de plancher (2) selon la revendication 1, dans lequel le ou chaque module (9) comprend un rail de montage allongé destiné à fixer par exemple un siège unique (3) au système de plancher (2).

3. Système de plancher (2) selon la revendication 1 ou 2, dans lequel le ou chaque module (8) comprend une partie formant couvercle 8 destinée à recouvrir la rainure ouverte.

4. Système de plancher (2) selon l'une quelconque des revendications précédentes, dans lequel le ou chaque module (9) comprend un bloc de montage.

5. Système de plancher (2) selon l'une quelconque des revendications précédentes, dans lequel les profilés allongés (4, 5) sont des profilés d'extrusion (4, 5).

6. Système de plancher (2) selon l'une quelconque des revendications précédentes, dans lequel les profilés allongés 4, 5 comprennent des moyens d'accouplement (12, 13, 14, 15) pour leur accouplement mutuel.

7. Système de plancher (2) selon la revendication 6, dans lequel les moyens d'accouplement (12, 13, 14, 15) comprennent une première pièce d'accouplement (12, 13) agencée sur un premier côté longitudinal du profilé (4, 5) concerné et une seconde pièce d'accouplement (14, 15) agencée sur le second côté longitudinal opposé.

8. Système de plancher (2) selon la revendication 7, dans lequel les première et seconde pièces d'accouplement (12, 13, 14, 15) comprennent des premières parties d'accouplement (12, 13) coopérant entre elles destinées à empêcher le déplacement dans les deux directions transversales perpendiculairement à la direction longitudinale et perpendiculairement entre elles et comprennent des secondes parties d'accouplement (13, 15) destinées à empêcher la rotation autour des premières parties d'accouplement (12, 14).

9. Système de plancher (2) selon la revendication 8, dans lequel les secondes parties d'accouplement (13, 15) comprennent un assemblage à encliquetage.

10. Véhicule (1) comprenant un plancher de charge (6) et un système de plancher (2) selon une quelconque des revendications précédentes, dans lequel les profilés allongés (4, 5) accouplés entre eux sont collés au plancher de charge (6).
